# FASCICULE DE BREVET EUROPEEN

(11) **EP 4 168 716 B1**
(45) Date de publication et mention de la délivrance du brevet: **07.08.2024**
(21) Numéro de dépôt: 21732493.8
(22) Date de dépôt: 26.05.2021
(51) Int. Cl.: F24F 8/22, F24F 13/06, F24F 13/08, F24F 3/163

(54) **DISPOSITIF DE TRAITEMENT DE L'AIR CONTENU DANS UN VOLUME PÉRIPHÉRIQUE**
VORRICHTUNG ZUR BEHANDLUNG DER IN EINEM PERIPHEREN RAUM ENTHALTENEN LUFT
DEVICE FOR TREATING THE AIR CONTAINED IN A PERIPHERAL SPACE

(30) Priorité: 23.06.2020 FR 2006555
(43) Date de publication de la demande: 26.04.2023
(73) Titulaire: SYSTEYA, 92130 Issy-les-Moulineaux (FR)
(72) Inventeur: LARTIGUE, Norbert, 92350 Le Plessis Robinson (FR)
(74) Mandataire: IP Trust
(86) Numéro de dépôt international: PCT/FR2021/050958
(87) Numéro de publication internationale: WO 2021/260284

(56) Documents cités:
- WO-A1-02/078754
- WO-A1-2005/039659
- CA-C- 1 294 481
- CN-U- 209 279 313
- DE-A1- 19 652 688
- DE-A1- 19 742 358

## Description

### DOMAINE DE L'INVENTION

La présente invention concerne un dispositif de traitement de l'air contenu dans un volume périphérique au dispositif sans nécessiter de moyens physiques de confinement de ce volume.

### ARRIERE PLAN TECHNOLOGIQUE DE L'INVENTION

Pour des raisons d'hygiène et de salubrité, il est d'usage de faire circuler de l'air dans les milieux confinés, par exemple une pièce d'un bâtiment, par l'intermédiaire d'un système de ventilation. Un tel système, visant à renouveler et à traiter l'air de la pièce, tend à brasser l'air ambiant. Ceci peut poser des problèmes lorsque cette pièce est occupée par une personne contaminée par un virus respiratoire notamment, car ce brassage tend à exposer à la contamination l'ensemble des personnes simultanément présentes dans la pièce.

La contamination peut être de nature organique, par exemple un virus ou une bactérie. Dans ce cas, les vecteurs de contamination comprennent les émissions de particules émises lors de la parole, de la toux ou d'éternuements de la personne contaminée. Une partie de ces particules organiques peuvent se retrouver sous la forme de gouttelettes de taille plus ou moins importante voire d'aérosol dans un volume d'air entourant le visage de cette personne contaminée. Ce sont ces particules contaminées, balayées par le flux de ventilation, qui vont être ingérées par les personnes présentes saines, et ceci pendant une durée qui peut être longue. Même si la densité spatiale d'éléments contaminants est faible (quelques unités par m3) les personnes saines finiront par être contaminées par effet d'accumulation de particules infectées qui viendront se déposer sur les parois du système respiratoire et du poumon proprement dit par un mécanisme d'intégration temporelle conduisant à l'inoculum qui constitue la dose minimale de contamination.

Le document WO02078754 propose un purificateur d'air comprenant une source de lumière ultraviolette pour traiter un flux d'air traversant un corps diélectrique poreux. Une fois traité, le flux d'air est éjecté dans l'environnement sans précaution particulières ce qui tend à brasser l'air ambiant, comme cela a été relevé dans un paragraphe précédent.

On comprend qu'un système conventionnel de ventilation pose alors un sérieux problème sanitaire, puisqu'il tend, par le brassage de l'air qu'il engendre, à faire circuler ces particules organiques aérosol dans l'environnement proche de toutes les personnes présentes dans la pièce, ce qui favorise leur contamination. Ce problème se pose de manière critique dans tous les lieux clos où des groupes de personnes sont susceptibles de se réunir que ce soit pour des raisons sociales (restaurant, bar), professionnelles (salle de réunion, bureau) ou médicales (chambre d'hôpital, cabinet médical).

### OBJET DE L'INVENTION

Un but de l'invention est de proposer un dispositif de traitement de l'air remédiant au moins en partie à cet inconvénient. Plus précisément, un but de l'invention est de proposer un dispositif apte à capter des aérosols ou gouttelettes émis par chacune des personnes, par exemple réunies autour d'une table, avant même qu'une personne voisine puisse les ingérer en respirant. L'air, entraînant les particules contaminées, est canalisé pour être dirigé vers un stérilisateur qui le purifie avant de le restituer à l'ensemble des personnes réunies. Les risques de contamination se trouvent ainsi fortement limités. Un but de l'invention est donc de proposer un dispositif assurant la captation de particules, gouttelettes et aérosols émis par un individu.

### BREVE DESCRIPTION DE L'INVENTION

En vue de la réalisation de ce but, l'objet de l'invention propose un dispositif aéraulique selon la revendication 1.

Le flux de recollement permet d'amorcer la circulation des autres flux dans l'espace périphérique au dispositif. Ils permettent également de maintenir la stabilité permanente du champ de vitesse d'air dans cet espace périphérique, même lorsque cet espace subit des perturbations aérauliques. On dispose donc d'un dispositif aéraulique permettant de traiter, par exemple stériliser, efficacement l'air de l'espace périphérique sans que celui-ci soit brassé comme dans les solutions de ventilation conventionnelles. Cet espace se trouve ainsi placé en légère dépression de sorte que tout aérosol ou toute particule générée par une source, telle le système respiratoire d'une personne, placée dans cet espace ne peut le quitter sans passer par le canal de stérilisation. La puissance de la source de rayonnement est telle que la dose virucide est atteinte dans tout élément de volume d'air du plénum.

Selon d'autres caractéristiques avantageuses et non limitatives de l'invention, prises seules ou selon toute combinaison techniquement réalisable :
- Le dispositif aéraulique comprend un cylindre support dans lequel l'extracteur est disposé, l'extracteur comprenant une hélice hélicoïdale munie d'une pluralité de pales ;
- le cylindre support est équipé, de son côté aval, d'un redresseur et/ou d'au moins une lame de déviation du flux d'air entrant dans le plenum;
- le collecteur d'entrée tubulaire présente une première extrémité disposée à une distance choisie de la surface, formant ainsi la bouche d'aspiration de l'air ;
- la bouche d'aspiration présente une section utile d'aspiration inférieure à la section du cylindre support ;
- le dispositif aéraulique comprend des volets inclineurs pour maîtriser le débit d'air entrant dans la bouche d'aspiration, les volets étant disposés dans des plans perpendiculaires à la surface plane ;
- le plénum présente une forme de sphère tronquée sur deux pôles opposés ;
- le plénum présente une forme de sphère de diamètre supérieur au diamètre du cylindre support ;
- la source de rayonnement est une lampe ultra-violet, par exemple une lampe mercure basse pression en forme de U ;
- une surface interne du plénum est recouverte d'une matière réfléchissante ;
- le diffuseur est formé d'une calotte sphérique, bordée d'une surface en cornet, qui coiffe une ouverture supérieure du plénum ;
- la fente circulaire est définie par deux lèvres et est équipée d'un déflecteur entre les deux lèvres pour séparer en sortie du diffuseur le flux de recollement, soumis à l'effet Cuanda, du flux de balayage ;
- le déflecteur a une position ajustable pour pouvoir régler les distances respectivement entre le déflecteur et les deux lèvres et adapter séparément l'intensité du flux de recollement et celle du flux de balayage ;
- la fente circulaire forme une première voie de diffusion de l'air purifié et le diffuseur comprend une deuxième voie de diffusion de l'air purifié, composée d'au moins une buse définie en position, section et direction pour atteindre une partie haute de l'espace périphérique ;
- la buse est formée d'un conduit terminé par une lèvre, le conduit présentant une surface intérieure portant des nervures en hélice ;
- la bouche d'aspiration est munie d'une grille afin d'arrêter les particules de taille supérieure à 500 microns et les collecter par séparation inertielle ;
- la bouche d'aspiration est surmontée d'une coupelle circulaire convexe, dont la convexité est orientée vers la surface plane, pour collecter le flux de recollement et produire un effet Venturi augmentant la capacité d'aspiration de la bouche d'aspiration.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 illustre l'utilisation d'un dispositif aéraulique conforme à l'invention ;
[Fig. 2] La figure 2 représente une vue en coupe d'un dispositif aéraulique conforme à l'invention ;
[Fig. 3] La figure 3 représente une vue de dessus des volets inclineurs pouvant être mis en oeuvre par un dispositif aéraulique conforme à l'invention ;
[Fig. 4] La figure 4 représente une carte de pression dans l'espace périphérique d'un dispositif aéraulique conforme à l'invention ;
[Fig. 5] La figure 5 représente une vue d'ensemble des flux engendrés par le dispositif de la figure 2.
[Fig. 6] La figure 6 représente une vue en coupe d'une partie inférieure d'une variante d'un dispositif aéraulique conforme à l'invention.
[Fig. 7] La figure 7 représente une vue en coupe d'une partie supérieure d'une variante d'un dispositif aéraulique conforme à l'invention.

### DESCRIPTION DETAILLEE DE L'INVENTION

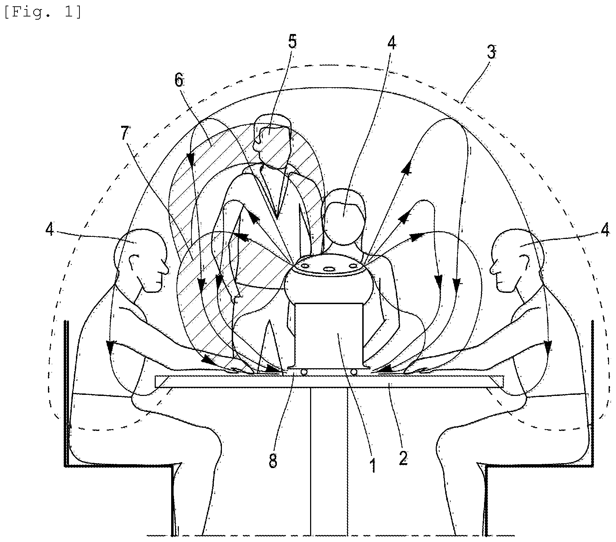

A titre d'illustration de l'intérêt d'un dispositif aéraulique conforme à l'invention, on a représenté sur la figure 1 un exemple d'emploi de ce dispositif 1. Une pluralité de personnes 4, 5 est disposée debout ou assises dans un environnement clos autour d'une table dont le plateau 2 définit une surface plane horizontale. Le dispositif 1 est disposé au centre du plateau. Les personnes 4, 5 sont à l'intérieur d'un volume d'air, périphérique au dispositif 1, et dont l'enveloppe 3 est représentée en trait pointillé sur la figure 1. Le dispositif aéraulique 1 vise à créer, dans ce volume, une légère dépression avec une circulation d'air se refermant sur le dispositif lui-même, en vue de traiter cet air dans un espace stérilisateur du dispositif 1. La circulation d'air est caractérisée par un champ de vitesse très homogène et très peu turbulent. Le dispositif 1 peut être dimensionné pour permettre une recirculation de ce volume d'air un nombre déterminé de fois par heure, typiquement compris entre 2 et 20 fois par heure, préférentiellement 10 fois par heure.

Comme cela sera présenté en détail dans une section ultérieure de cette description, le dispositif 1 comprend un extracteur d'air ici disposé dans un collecteur d'entrée. Il est traversé par une veine d'air montante et perpendiculaire au plateau, et plus généralement à la surface plane sur laquelle repose le dispositif. La veine d'air traverse notamment un plénum disposé sur le collecteur d'entrée, le plénum comprenant une source de rayonnement apte à stériliser l'air de la veine et adapté aux virus ou bactéries à neutraliser. Un diffuseur est monté sur le plénum pour diffuser la veine d'air traitée dans le volume périphérique selon des lignes de flux d'air 6, 7 non turbulent qui se referment sur des lignes d'un flux d'air collecteur 8 orientées vers une bouche d'aspiration du collecteur d'entrée, disposé au plus près de la surface plane sur laquelle le dispositif 1 repose. On tire ainsi profit de cette surface pour guider le flux d'air collecteur 8 vers la bouche.

Lorsque le dispositif 1 est en fonctionnement, l'air circule en permanence sur lui-même dans le volume périphérique défini par l'enveloppe 3 en limitant les échanges avec l'extérieur de ce volume. Dans l'exemple représenté sur la figure 1, l'aérosol 6 émis par la personne debout 5 et l'aérosol 7 émis par la personne assise 4 sont entraînés par les flux d'air engendrés par le dispositif 1 et sont collectés sans possibilité d'évasion au niveau de la bouche d'aspiration du collecteur en vue d'y être traités. Avantageusement, le flux d'air dans lequel se trouve une personne située dans l'environnement ne vient jamais balayer les zones où se trouvent d'autres personnes. De la même manière, tout aérosol émis par une quelconque des personnes de l'espace périphérique est assuré d'être capté pour être ensuite traité dans le stérilisateur.

L'extracteur du dispositif 1 crée un gradient de pression entre la pression à son aval et la pression à son amont qui maintient la circulation de l'air dans un mouvement de rabattement. Ceci évite toute dissémination dans l'espace de l'air éventuellement contaminé.

Le volume d'air périphérique définit donc en quelque sorte une capsule aéraulique. Cette capsule est obtenue par les lignes de flux créées par le dispositif 1 en conjonction avec la surface horizontale sur lequel le dispositif 1 repose. Le dispositif 1 crée notamment un flux laminaire, dit « flux de collecte » 8, au-dessus de cette surface, qui assure la collecte de tous les flux rabattus vers la bouche d'aspiration du collecteur d'entrée. La vitesse d'air est augmentée du fait de la dépression créé par l'extracteur ce qui assure un balayage complet de la surface horizontale en collectant et refermant toutes les lignes de flux descendants.

Avantageusement, et comme cela est visible sur la figure 1, le dispositif 1 crée également deux tubes de flux convergents vers le flux de collecte 8, le premier tube étant destiné à capter les aérosols des personnes assises 4, et le deuxième tube étant destiné à capter les aérosols des personnes debout 5 éventuellement présentes dans les intervalles qui séparent les personnes assises 4, c'est-à-dire qu'ils sont dirigés pour englober un volume d'environ quelques dizaines de litres autour du visage d'une personne, lorsque cette personne est assise ou debout autour de la table.

Pour ne pas excessivement affecter le bon fonctionnement du dispositif 1, celui-ci est préférablement disposé dans une atmosphère ambiante non perturbée du point de vue aéraulique, c'est-à-dire qu'il n'y a pas de ventilation ou de fenêtres/portes ouvertes et susceptibles de créer des flux parasites dans cet environnement clos. Le dispositif 1 est cependant très robuste vis-à-vis des perturbations aérauliques externes susceptibles d'interférer dans l'espace traité, car le flux de réamorçage de la recirculation reste peu altérable grâce au flux de recollement sur la surface du plénum qui reste particulièrement stable et peu affecté par les perturbations aéraulique.

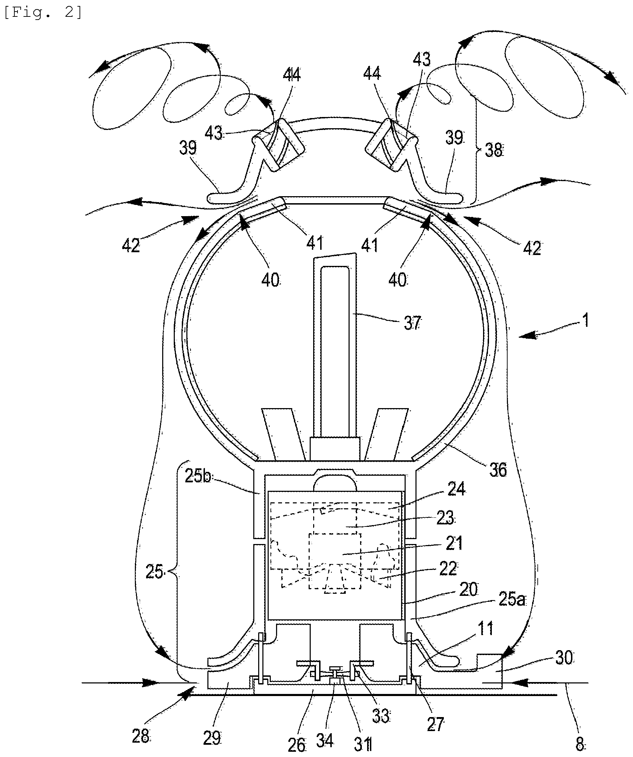

En référence à la figure 2, on présente maintenant un mode de réalisation d'un dispositif aéraulique 1 conforme à l'invention. Le dispositif 1 comprend, disposé dans un collecteur d'entrée tubulaire 25, un extracteur d'air 21 comprenant une hélice hélicoïdale munie d'une pluralité de pales 22 agencées sur un moyeu qui peut être caréné. L'extracteur 21 est disposé dans un cylindre support 20. Comme cela est bien connu en soi, l'extracteur comprend un moteur électrique 23 pour mettre en mouvement l'hélice et engendrer le flux d'air montant dans le dispositif 1. Le cylindre support 20 est équipé, du côté aval au flux d'air montant, d'un redresseur 24 formé d'aubes stationnaires afin de neutraliser le mouvement de giration de l'air provoqué par l'hélice et de redresser les lignes de flux selon l'axe du cylindre 20. On accroit de la sorte le débit d'air du flux sortant en permettant le bon fonctionnement du répartiteur/diffuseur d'air qui alimente le plénum où s'opère la relaxation et l'homogénéisation de la masse d'air dont la vitesse est ainsi légèrement ralentie. On pourrait naturellement envisager de disposer l'extracteur 21 en dehors du collecteur d'entrée 25, dans la mesure où cet extracteur permet d'engendrer le flux d'air montant dans le dispositif.

De manière avantageuse, le collecteur d'entrée tubulaire 25 repose sur un support du dispositif 26 par l'intermédiaire d'une pluralité d'axes d'écartement 27, par exemple de 3 à 8 axes. Le support 26 est destiné à faire reposer le dispositif 1 sur une surface horizontale, par exemple le plateau 2 d'une table comme cela a été illustré dans la figure 1. Le collecteur d'entrée est ici formé de deux pièces tubulaires 25a, 25b permettant de disposer, dans le conduit défini par ces deux pièces, le cylindre support 20 contenant l'extracteur 21. Le collecteur d'entrée 25 présente une première extrémité (orientée vers le support 26) évasée dégageant un épaulement périphérique sur lequel les axes d'écartement 27 peuvent prendre appui. Les axes d'écartement 27 permettent de maintenir le contour de la première extrémité du collecteur d'entrée 25 à une distance choisie du support du dispositif 26 et donc de la surface sur laquelle le dispositif 1 repose. Cet espace dégagé forme ainsi une bouche d'aspiration 28 de l'air périphérique pour notamment recevoir le flux de collecte laminaire 8. La distance séparant la première extrémité du collecteur tubulaire 25 à la surface est choisie pour créer une section utile inférieure à la section utile de l'extracteur 21 (sensiblement égale à la section du cylindre support 20). On peut par exemple choisir cette distance pour avoir un rapport de sections utiles de l'ordre de 0,5. On fait naitre de la sorte une dépression à l'entrée de la bouche d'aspiration 28, dont la valeur exacte dépend de la vitesse du flux d'air et de la perte de charge qui résulte du virage à 90° des lignes de flux d'air aspiré qui s'alignent sur l'axe du cylindre support 20 de l'extracteur. Pour une vitesse de flux d'air de l'ordre de 1m/s, la dépression à l'entrée de la bouche 28 peut être de l'ordre du Pascal ou de quelques Pascal.

Le dispositif représenté sur la figure 2 comprend des volets inclineurs 29, 30 optionnels permettant de moduler le flux d'air circulant dans le collecteur 25. Alternativement, on pourrait prévoir de commander le moteur 23 de l'extracteur 21 pour moduler ce flux. Les volets 29, 30 sont avantageux en ce qu'ils permettent d'adapter le volume de l'espace périphérique aux conditions d'installation du dispositif 1 (taille du plan horizontal, hauteur des assises, ...) voire aux conditions atmosphériques qui peuvent avoir une influence dans certains cas extrêmes ; l'adaptation s'opérant par le réglage du débit d'air que permet la position réglable des volets 29, 30. Une pluralité de volets orientables, par exemple de 3 à 8 volets, disposés dans des plans perpendiculaires au support 26 et donc à la surface sur laquelle repose le dispositif 1, est disposée au niveau de la bouche d'aspiration 28 et dans l'espace séparant le support du dispositif 26 à la première extrémité du collecteur tubulaire 25.

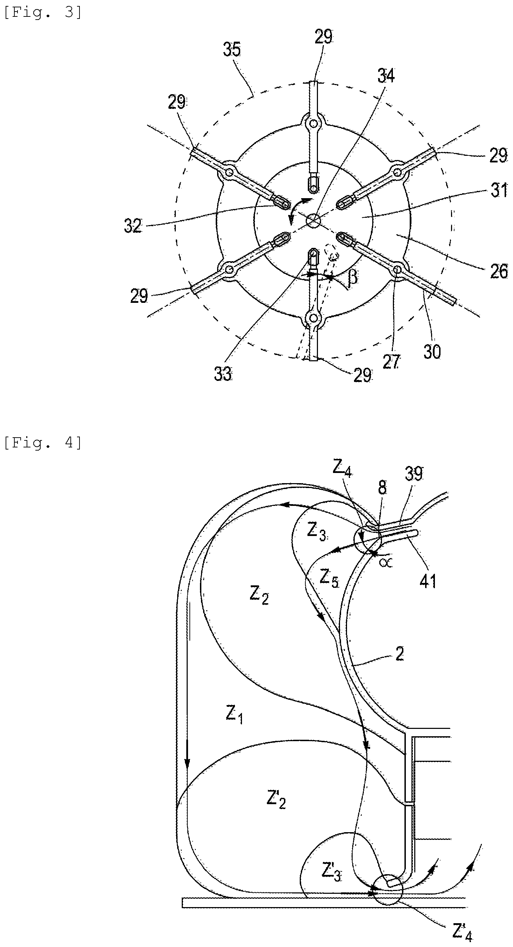

Comme cela est rendu apparent sur la figure 3, les volets 29, 30 sont ici solidaires des axes d'écartement 27 du collecteur 25, et sont couplés entre eux au moyen d'un plateau de commande 31 à trous oblongs 32 radiaux solidaires de biellettes d'entrainement 33 respectivement fixées aux extrémités internes des volets 29, 30 et imposant un angle de rotation par rapport à une position neutre radiale de tous les volets 29, 30. Le plateau de commande 31 est libre d'entrer en rotation autour d'un axe de rotation 34 qui lui est perpendiculaire. On a représenté en traits pointillés 35 la projection dans le plan de la figure du contour de la première extrémité du collecteur tubulaire 25.

Les volets 29, 30 peuvent être commandés grâce à une manette 30 fixée à l'un d'entre eux ou formée d'une extension d'un des volets comme cela est représenté sur la figure 2. En imposant, par l'intermédiaire du plateau de commande 31, un angle beta (β) à tous les volets 29, 30 par rapport à la position neutre radiale, on contrôle la composante de giration de l'air entrant dans le collecteur 25 : si l'air tourne dans le même sens que l'hélice de l'extracteur 21, le débit d'air diminue, dans le cas contraire le débit d'air est augmenté. Le contrôle de l'angle des volets 29, 30 permet donc de maîtriser le débit d'air autour d'un débit nominal, typiquement de l'ordre de plus ou moins 30% autour de ce débit nominal.

Dans un montage alternatif, le système de volet pourrait être remplacé par un système d'entrainement à vitesse variable de l'hélice qui aurait un effet identique sur le débit d'air.

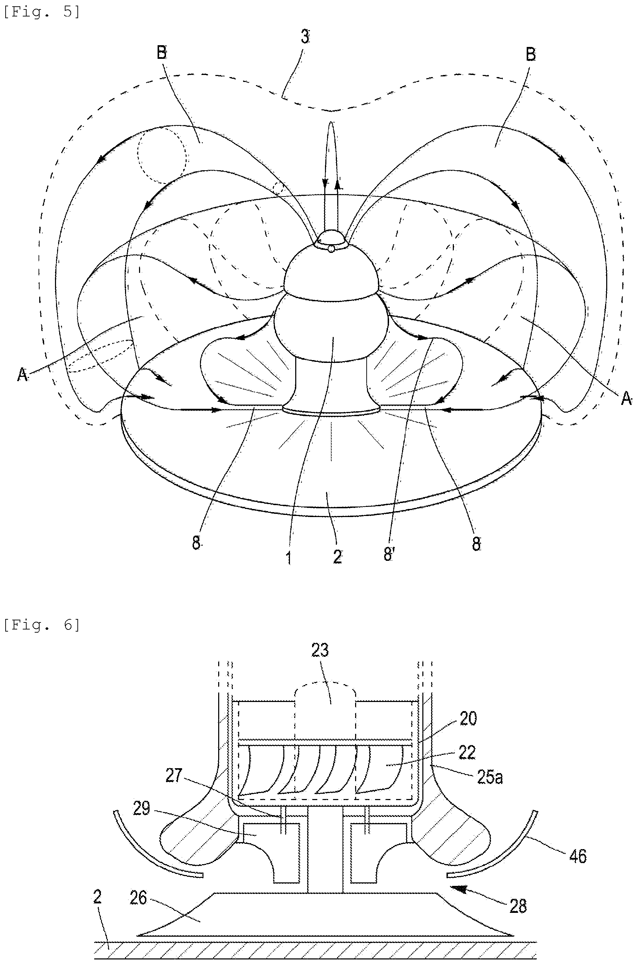

De manière avantageuse mais optionnelle, et comme cela est illustré sur la figure 6, la bouche d'aspiration 28 peut être surmontée d'une coupelle 46 circulaire convexe et dont la convexité est orientée vers le bas, c'est-à-dire vers la surface plane du support 2. La coupelle 46 collecte majoritairement le flux de recollement 8' issu du diffuseur 38. La vitesse du flux d'air collecté par la coupelle 46 étant relativement plus élevée que celle du flux collecté par la bouche d'aspiration elle-même, ces deux flux se combinent de sorte à produire un effet Venturi qui augmente significativement la capacité d'aspiration de la bouche d'aspiration 28.

Poursuivant la description du dispositif aéraulique 1 représenté sur la figure 2, le collecteur d'entrée 25 est surmonté d'un plénum 36 traversé par la veine d'air engendrée par l'extracteur 21. Le plénum 36 comprend une source de rayonnement 37 apte à stériliser l'air de la veine. Le plénum 36 présente ici une forme de sphère tronquée sur deux pôles opposés de manière un définir un passage permettant l'écoulement de la veine d'air vers le diffuseur 38. Du côté du collecteur 25, la troncature est choisie pour pouvoir se raccorder à une seconde extrémité du collecteur tubulaire 25. Sur le pôle opposé, le plénum 36 est tronqué au niveau d'un parallèle situé aux alentours de 60° de latitude, et définit ainsi une ouverture circulaire. Le plénum 36 présente un diamètre supérieur au diamètre du cylindre support 20 (rapport supérieur ou égal à deux), ce qui a pour effet d'homogénéiser le champ de vitesse du flux d'air montant et d'abaisser la valeur de sa vitesse moyenne. En conséquence, le temps de résidence de l'air dans le plénum 36 et donc la durée d'exposition de cet air aux rayonnements stérilisants (la durée du traitement) est suffisant pour que cet air soit purifié même avec une source 37 de puissance relativement réduite. Typiquement, la vitesse de l'air dans le plénum 36 pourra être comprise entre 0,5 et 2m/s.

On a ici muni l'entrée du plénum 36 d'une pluralité de lames de déviation du flux d'air entrant, de manière à bien le répartir dans tout le volume interne du plénum 36 et obtenir, dans le plénum, des vitesses aussi homogènes que possible.

Au centre du plénum 36, on a disposé la source de rayonnement 37, ici une lampe à ultra-violet (de longueur d'onde centrée sur 254nm) dont la puissance est choisie pour produire une dose de rayonnement suffisante pour traiter l'air du plénum. Cette dose pourra à titre d'exemple être choisie supérieure à 70 J/m², sachant que la plupart des virus ou des bactéries connus sont inactivés après exposition à une dose d'environ 40 J/m². Dans l'exemple représenté sur la figure 2, la source de rayonnement 37 est formée d'une lampe mercure basse pression en forme de U, chaque branche du U présentant une longueur d'environ 10cm. Avantageusement, la surface interne 39 du plénum 36 est recouverte d'une matière réfléchissante afin tirer pleinement profit du rayonnement fourni par la source 37. La lampe mercure pourra présenter une puissance électrique de 60W qui permettra de fournir de l'ordre de 30W radiatifs UV-C, ce qui permet au dispositif aéraulique 1 de traiter de l'ordre de 30m³/h.

Le plénum 36 constitue une source réserve de pression qui assure le fonctionnement optimal des voies du diffuseur et sur lequel repose l'homogénéité du champ des vitesses d'air.

La partie supérieure du plénum sphérique 36 est surmontée du diffuseur 38 qui reçoit donc un air purifié par l'exposition au rayonnement UV. Le diffuseur 38 a pour fonction de diffuser, dans le volume périphérique au dispositif 1, la veine d'air montante, selon des lignes de flux d'air déterminés. Dit autrement, le diffuseur 38 distribue l'air dans le volume périphérique aux endroits sensibles où sont émis les aérosols, éventuellement contaminés, par les personnes susceptibles d'être présentes.

Dans l'exemple représenté, le diffuseur 38 est formé d'une calotte sphérique, bordée d'une surface en cornet, qui coiffe l'ouverture circulaire supérieure du plénum 36. Il présente une première voie de diffusion de l'air, permettant de constituer un premier tube de flux convergeant, constitué par un orifice en fente circulaire 42 défini entre le bord supérieur du plénum, formant une lèvre inférieure 41 de la fente, et par le bord en cornet de la calotte qui forme la lèvre supérieure 39 de la fente 42. La lèvre inférieure 41 présente un profil comprenant un segment rectiligne qui s'étend de l'ouverture supérieure du plénum 36 à une arête vive 40. Elle prend donc la forme d'une surface plane en couronne, typiquement inclinée selon un angle compris entre 10 et 20° d'angle avec la tangente au cercle correspondant à une section diamétrale du plénum sphérique 36 (angle alpha (α) représenté sur la figure 4). La partie tronconique définissant la lèvre supérieure 39 et reliant la surface en cornet à la calotte du diffuseur 38 forme une surface parallèle à la couronne plane de la lèvre inférieure 41 mais présente un léger retrait par rapport à la lèvre inférieure qui détermine l'angle d'épanouissement vers le haut du flux d'air sortant. Cette partie tronconique s'ouvre avec une courbure qui augmente rapidement vers l'extérieur de la lèvre supérieure 39.

Les filets d'air qui s'échappent de la fente circulaire 42 s'organisent pour créer un épanouissement du flux qui résulte d'un effet Cuanda sur chacune des deux lèvres 39, 41, particulièrement marqué sur la lèvre inférieure. La fente est configurée, notamment via la lèvre inférieure 41, pour provoquer un recollement d'une partie des filets d'air (les filets d'air inférieurs) sur la surface externe du plénum 36 de sorte que les lignes de ce flux de recollement plongent et retombent en ligne directe sur le flux de collecte 8 horizontal, bouclant ainsi le parcours de recirculation. Ces filets inférieurs présentent une grande vitesse à la sortie de la fente circulaire 42, ils amorcent la circulation des autres flux dans l'espace périphérique au dispositif 1. Ils sont très stables ce qui permet de maintenir la stabilité permanente du champ de vitesse d'air dans l'espace périphérique, même lorsque cet espace subit des perturbations aérauliques qui tendent à distordre les lignes de flux établies. La lèvre supérieure 39 étant disposée en léger retrait par rapport à la lèvre inférieure 41 relève une partie des filets d'air (les filets d'air supérieurs) qui s'échappent de la fente circulaire 42 pour les ramener sensiblement à l'horizontale et distribuer l'air dans le volume périphérique aux endroits sensibles où sont typiquement émis les aérosols par des personnes assises 4. Les filets supérieurs forment le flux de balayage et redescendent vers le flux de collecte bouclant ainsi leur parcours de recirculation. Les aérosols sont ainsi collectés et entraînés vers la bouche d'aspiration 28 du collecteur 25.

De la sorte, on assure un balayage complet de tous les filets d'air issu de la fente circulaire 42 du diffuseur 38. La recirculation est complète, la régénération de l'air est totale dans l'espace périphérique et aucun aérosol ne peut s'échapper, pris dans le champ de vitesse de l'air créant la pression dynamique d'aspiration. Le champ des vitesses aérauliques de l'espace est ainsi organisé de sorte qu'aucun des filets d'air qui vient lécher le visage d'une personne ne peut rencontrer le visage d'une autre personne sise dans l'environnement, avant d'être capté dans le stérilisateur et donc purifié.

Sur la figure 4 on a ainsi représenté une carte de pression dans l'espace périphérique d'un dispositif aéraulique 1 conforme à l'invention ainsi que les vecteurs vitesses de l'air dans les différentes zones. On observe dans un environnement à la pression atmosphérique (dans lequel la vitesse de l'air Vair = 0 m/s) :
- Une première zone Z1 médiane où la vitesse air est inférieure à 0,1 m/s avec une chute de pression δP₁ < 0,03 Pa ;
- Deux zones intermédiaires Z2 et Z2' où la vitesse air est comprise entre 0,1 m/s et 0,4 m/s avec une chute de pression comprise entre 0,03 et 0,06 Pa ;
- Deux zones Z3 et Z3'à plus forte dépression correspondant aux zones de divergence ou convergence du flux d'air où la vitesse air est comprise entre 0,4 et 1 m/s donnant une dépression comprise entre 0,06 et 0,6 Pa ;
- Deux zones Z4 et Z4'où les flux d'air sont sous plus forte striction à l'entrée ou à la sortie des bouches où la vitesse air est comprise entre 1 et 2 m/s, voire même jusqu'à 3m/s, donnant des dépressions qui varient entre 0,6 et 5 Pa ;
- Une zone Z5 de dépression plutôt turbulente dans l'espace où l'on observe l'effet Cuanda avec une dépression moyenne aux alentours de 1,5 Pa.

Avantageusement, la calotte formant le diffuseur 38 comprend également une deuxième voie de diffusion de l'air purifié, permettant de constituer un deuxième tube de flux convergent et composée d'au moins une buse, et avantageusement une pluralité de buses, définie(s) en position, section et direction pour atteindre une partie haute de l'espace périphérique où les têtes des personnes debout 5 sont susceptibles de se situer.

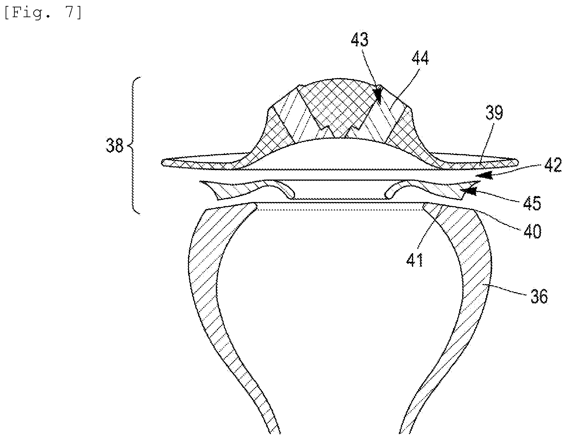

De manière également avantageuse mais optionnelle, la fente circulaire 42 du diffuseur 38 peut être équipée d'un déflecteur 45 annulaire profilé, comme cela est représenté sur la figure 7, entre la lèvre supérieure 39 et la lèvre inférieure 41. Ce déflecteur permet de séparer en sortie du diffuseur le flux de recollement 8' (les filets d'air inférieurs), soumis à l'effet Cuanda, du flux de balayage (les filets d'air supérieurs) et donc de minimiser le couplage aval entre eux. Le déflecteur 45 remonte suffisamment en amont vers le plénum 36 pour qu'il n'y ait aucun couplage amont de ces flux. Le déflecteur 45 a une position ajustable afin de pouvoir régler les distances respectives entre la lèvre supérieure 39 et le déflecteur 45 d'une part, et le déflecteur 45 et la lèvre inférieure 41 d'autre part, pour adapter séparément l'intensité du flux de recollement 8', qui détermine la robustesse du système aux perturbations aérauliques externes, et l'intensité du flux de balayage qui détermine le volume balayé.

Le dispositif 1 pris en exemple et représenté sur la figure 2 comprend quatre buses 43 constituées de conduits cylindriques spatialement répartis sur la calotte sphérique formant le diffuseur 38. Les conduits sont terminés par une lèvre dont le profil présente un rayon à très forte courbure qui évite l'épanouissement du jet d'air. Les surfaces intérieures des conduits portent des nervures 44 en hélice ayant par exemple un pas égal à la longueur du cylindre. On forme de la sorte un jet d'air en sortie de chaque buse 43 dont la vitesse présente une composante en translation et une composante en giration. Le premier effet est de réduire la vitesse linéaire, ce qui retarde l'éclatement du jet en sortie de buse 43. Le deuxième effet est de favoriser un maintien plus durable à l'état homogène du fait du moment cinétique du tube d'air en rotation. L'éclatement du jet se produit essentiellement sous l'action des forces d'inertie spatialement homogènes (forces centrifuges) au lieu d'un mécanisme turbulent de collision frontale du jet avec l'air inerte environnant. L'éclatement du jet permet de créer un champ de vitesse homogène dans l'espace d'éclatement où se trouve l'aérosol à collecter. Le flux d'air ainsi obtenu vient balayer la tête des personnes debout 5, par exemple disposées autour de la table sur laquelle le dispositif 1 repose, en prenant l'hypothèse que les buses 43 sont orientées vers l'intervalle qui sépare deux personnes assises 4. Les aérosols de ces personnes se trouvent entraînés vers le bas, car réabsorbés par les flux qui s'échappent de la fente circulaire pour rejoindre enfin le flux de collecte 8 horizontal collecteur de tous les flux. Les filets d'air des buses supérieures 43 sont intégrés dans la recirculation et donc traités comme le reste du flux de recirculation.

La figure 5 présente une vue d'ensemble des flux engendrés par le dispositif de la figure 2. On retrouve bien les deux tubes A, B de flux convergents, le premier tube A étant destiné à capter les aérosols des personnes assises 4 autour de la surface plane 2, et le deuxième tube B étant destiné à capter les aérosols des personnes debout 5 placées dans les intervalles.

Le premier tube A comprend notamment un flux de recollement 8' plongeant le long de la surface externe du plénum 36 vers la bouche d'aspiration 28, rabattu par le flux de collecte 8. Comme on l'a déjà mentionné, le flux de recollement permet d'amorcer la circulation des autres flux dans l'espace périphérique au dispositif 1. Ils permettent également de maintenir la stabilité permanente du champ de vitesse d'air dans l'espace périphérique, même lorsque cet espace subit des perturbations aérauliques.

On peut de la sorte capter et stériliser les aérosols émis à proximité du dispositif aéraulique 1. Ceux-ci ne peuvent s'échapper de la « capsule » que ce dispositif 1 entretient autour de lui grâce à la grande homogénéité de pression faiblement négative et grâce à l'absence de turbulence induite. Le dispositif 1 est organisé pour limiter au maximum les variations brutales en direction et en amplitude de la vitesse de l'air le long d'une ligne de flux. Les écoulements doivent autant que possible rester laminaires et, si des turbulences apparaissent, des volumes d'apaisement tel le plenum 36 (qui efface les turbulences de l'extracteur notamment) sont disposés pour les éteindre.

Bien entendu l'invention n'est pas limitée au mode de mise en oeuvre décrit et on peut y apporter des variantes de réalisation sans sortir du cadre de l'invention tel que défini par les revendications.

Ainsi, et bien que l'on évitera d'une manière générale de placer des éléments susceptibles de perturber la circulation de la veine d'air dans le dispositif 1 (comme un filtre), on peut prévoir de disposer une grille à l'entrée de la bouche d'aspiration afin d'arrêter les particules de taille supérieure à 500 microns et collecter ces particules après séparation inertielle dans la zone où les lignes de flux virent de 90°, à partir de l'horizontale devenant verticales pour entrer dans l'extracteur d'air 21. sans sortir du cadre de l'invention tel que défini par les revendications.

Ainsi, et bien que l'on évitera d'une manière générale de placer des éléments susceptibles de perturber la circulation de la veine d'air dans le dispositif 1 (comme un filtre), on peut prévoir de disposer une grille à l'entrée de la bouche d'aspiration afin d'arrêter les particules de taille supérieure à 500 microns et collecter ces particules après séparation inertielle dans la zone où les lignes de flux virent de 90°, à partir de l'horizontale devenant verticales pour entrer dans l'extracteur d'air 21.

## Revendications

1. Dispositif aéraulique (1) de traitement de l'air contenu dans un volume périphérique, le dispositif (1) étant susceptible d'être traversé par une veine d'air et comprenant :
a. Un collecteur d'entrée (25) tubulaire destiné à reposer sur une surface plane comportant une bouche d'aspiration (28) au niveau de laquelle les lignes de flux d'air (6,7) du volume périphérique sont destinées à se refermer ;
b. Un extracteur (21) pour engendrer la circulation de la veine d'air dans le dispositif (1) ;
c. Un plénum (36) destiné à être traversé par la veine d'air engendrée dans le collecteur d'entrée (25), le plénum (36) comprenant une source de rayonnement (37) apte à stériliser l'air de la veine, le plénum (36) étant configuré pour y faire résider l'air de la veine d'air pendant une durée de traitement choisie selon la puissance de la source (37) ;
d. Un diffuseur (38) monté sur le plénum (36) et
le dispositif aéraulique étant **caractérisé en ce que** le diffuseur est configuré pour faire diffuser la veine d'air dans le volume périphérique selon des lignes de flux comprenant au moins un flux de recollement (8') plongeant le long d'une surface externe du plénum (36) vers la bouche d'aspiration (28), le diffuseur présentant une fente circulaire (42) configurée pour former, par effet Cuanda, le flux de recollement (8'), de sorte que des lignes de flux d'air (6, 7) non turbulent du volume périphérique se referment sur la veine d'air permettant à l'air de circuler en permanence sur lui-même dans le volume périphérique en limitant les échanges avec l'extérieur de ce volume et en évitant le brassage de l'air au sein de ce volume.

2. Dispositif aéraulique (1) selon la revendication précédente comprenant un cylindre support (20) dans lequel l'extracteur (21) est disposé, l'extracteur comprenant une hélice hélicoïdale munie d'une pluralité de pales (22).

3. Dispositif aéraulique (1) selon la revendication précédente dans lequel le cylindre support (20) est équipé, de son côté aval, d'un redresseur (24) et/ou d'au moins une lame de déviation (38) du flux d'air entrant dans le plénum (36).

4. Dispositif aéraulique (1) selon l'une des revendications précédentes dans lequel le collecteur d'entrée (25) tubulaire présente une première extrémité disposée à une distance choisie de la surface, formant ainsi la bouche d'aspiration (28) de l'air.

5. Dispositif aéraulique (1) selon l'une des revendications 2 et 3 dans lequel la bouche d'aspiration (28) présente une section utile d'aspiration inférieure à la section du cylindre support (20).

6. Dispositif aéraulique (1) selon la revendication 3 comprenant des volets inclineurs (29, 30) pour maîtriser le débit d'air entrant dans la bouche d'aspiration (28), les volets (29, 30) étant disposés dans des plans perpendiculaires à la surface plane.

7. Dispositif aéraulique (1) selon l'une des revendications précédentes dans lequel le plénum (36) présente une forme de sphère tronquée sur deux pôles opposés.

8. Dispositif aéraulique (1) selon la revendication 2 dans lequel le plénum (36) présente une forme de sphère de diamètre supérieur au diamètre du cylindre support (20).

9. Dispositif aéraulique (1) selon l'une des revendications précédentes dans lequel la source de rayonnement (37) est une lampe ultra-violet, par exemple une lampe mercure basse pression en forme de U.

10. Dispositif aéraulique (1) selon l'une des revendications précédentes dans lequel une surface interne (39) du plénum (36) est recouverte d'une matière réfléchissante.

11. Dispositif aéraulique (1) selon l'une des revendications précédentes dans lequel le diffuseur (38) est formé d'une calotte sphérique, bordée d'une surface en cornet, qui coiffe une ouverture supérieure du plénum (36).

12. Dispositif aéraulique (1) selon l'une des revendications précédentes dans lequel la fente circulaire (42) est définie par deux lèvres (39,41) et est équipée d'un déflecteur (45) entre les deux lèvres (39,41) pour séparer en sortie du diffuseur le flux de recollement (8'), soumis à l'effet Cuanda, du flux de balayage.

13. Dispositif aéraulique (1) selon la revendication précédente dans lequel le déflecteur (45) a une position ajustable pour pouvoir régler les distances respectivement entre le déflecteur (45) et les deux lèvres (39,41) et adapter séparément l'intensité du flux de recollement (8') et celle du flux de balayage.

14. Dispositif aéraulique (1) selon l'une des revendications précédentes dans lequel la fente circulaire (42) forme une première voie de diffusion de l'air purifié et le diffuseur (38) comprend une deuxième voie de diffusion de l'air purifié, composée d'au moins une buse (43) définie en position, section et direction pour atteindre une partie haute de l'espace périphérique.

15. Dispositif aéraulique (1) selon la revendication précédente dans lequel la buse (43) est formée d'un conduit terminé par une lèvre, le conduit présentant une surface intérieure portant des nervures (44) en hélice.

16. Dispositif aéraulique (1) selon l'une des revendications précédentes, dans lequel la bouche d'aspiration (28) est munie d'une grille afin d'arrêter les particules de taille supérieure à 500 microns et les collecter par séparation inertielle.

17. Dispositif aéraulique (1) selon l'une des revendications précédentes, dans lequel la bouche d'aspiration (28) est surmontée d'une coupelle (46) circulaire convexe, dont la convexité est orientée vers la surface plane, pour collecter le flux de recollement (8') et produire un effet Venturi augmentant la capacité d'aspiration de la bouche d'aspiration (28).

## Patentansprüche

1. Lufttechnische Vorrichtung (1) zum Behandeln der Luft, die in einem peripheren Volumen enthalten ist, wobei die Vorrichtung (1) geeignet ist, durch einen Luftstrom durchquert zu werden, und umfassend:
a. einen rohrförmigen Einlasssammler (25), der dazu bestimmt ist, auf einer ebenen Oberfläche zu ruhen, der eine Saugmündung (28) aufweist, an der die Luftströmungslinien (6, 7) des peripheren Volumens dazu bestimmt sind, sich zu schließen;
b. einen Extraktor (21) zum Erzeugen der Zirkulation des Luftstroms in der Vorrichtung (1);
c. ein Plenum (36), das dazu bestimmt ist, durch den Luftstrom durchquert zu werden, der in dem Einlasssammler (25) erzeugt wird, das Plenum (36) umfassend eine Strahlungsquelle (37), die in der Lage ist, die Luft des Stroms zu sterilisieren, wobei das Plenum (36) zum Beruhenlassen der Luft des Luftstroms dort während einer Behandlungsdauer konfiguriert ist, die entsprechend der Leistung der Quelle (37) gewählt wird;
d. einen Diffusor (38), der an dem Plenum (36) montiert ist, und wobei die lufttechnische Vorrichtung **dadurch gekennzeichnet ist, dass** der Diffusor zum Diffundierenlassen des Luftstroms in dem peripheren Volumen entlang von Strömungslinien konfiguriert ist, umfassend mindestens eine wiederanliegende Strömung (8'), die entlang einer Außenoberfläche des Plenums (36) in Richtung der Saugmündung (28) sinkt, wobei der Diffusor einen kreisförmigen Schlitz (42) vorweist, der zum Ausbilden, durch einen Cuanda-Effekt, der wiederanliegenden Strömung (8') so konfiguriert ist, dass sich nicht turbulente Luftströmungslinien (6, 7) des peripheren Volumens an dem Luftstrom schließen, wobei der Luft ermöglicht wird, in dem peripheren Volumen ständig um sich selbst zu zirkulieren, indem die Austausche mit dem Äußeren dieses Volumens begrenzt und die Durchmischung der Luft innerhalb dieses Volumens vermieden wird.

2. Lufttechnische Vorrichtung (1) nach dem vorstehenden Anspruch, umfassend einen Stützzylinder (20), in dem der Extraktor (21) angeordnet ist, der Extraktor umfassend eine schraubenförmige Luftschraube, die mit einer Vielzahl von Schaufeln (22) versehen ist.

3. Lufttechnische Vorrichtung (1) nach dem vorstehenden Anspruch, wobei der Stützzylinder (20) auf seiner stromabwärtigen Seite mit einem Gleichrichter (24) und/oder mindestens einem Umlenkflügel (38) der Luftströmung ausgestattet ist, die in das Plenum (36) eintritt.

4. Lufttechnische Vorrichtung (1) nach einem der vorstehenden Ansprüche, wobei der rohrförmige Einlasssammler (25) ein erstes Ende vorweist, das in einem gewählten Abstand von der Oberfläche angeordnet ist, wobei so die Luftansaugmündung (28) ausgebildet wird.

5. Lufttechnische Vorrichtung (1) nach einem der Ansprüche 2 und 3, wobei die Saugmündung (28) einen Saugnutzquerschnitt vorweist, der kleiner als der Querschnitt des Stützzylinders (20) ist.

6. Lufttechnische Vorrichtung (1) nach Anspruch 3, umfassend Schwenkklappen (29, 30) zum Steuern des Luftdurchflusses, der in die Saugmündung (28) eintritt, wobei die Klappen (29, 30) in Ebenen senkrecht zu der ebenen Oberfläche angeordnet sind.

7. Lufttechnische Vorrichtung (1) nach einem der vorstehenden Ansprüche, wobei das Plenum (36) die Form eines Kugelstumpfes an zwei gegenüberliegenden Polen vorweist.

8. Lufttechnische Vorrichtung (1) nach Anspruch 2, wobei das Plenum (36) die Form einer Kugel mit einem Durchmesser vorweist, der größer als der Durchmesser des Stützzylinders (20) ist.

9. Lufttechnische Vorrichtung (1) nach einem der vorstehenden Ansprüche, wobei die Strahlungsquelle (37) eine Ultraviolettlampe, beispielsweise eine U-förmige Niederdruckquecksilberlampe, ist.

10. Lufttechnische Vorrichtung (1) nach einem der vorstehenden Ansprüche, wobei eine Innenoberfläche (39) des Plenums (36) mit einem reflektierenden Material bedeckt ist.

11. Lufttechnische Vorrichtung (1) nach einem der vorstehenden Ansprüche, wobei der Diffusor (38) aus einer Kugelkalotte ausgebildet ist, die von einer hornförmigen Oberfläche eingefasst ist, die eine obere Öffnung des Plenums (36) abdeckt.

12. Lufttechnische Vorrichtung (1) nach einem der vorstehenden Ansprüche, wobei der kreisförmige Schlitz (42) durch zwei Lippen (39, 41) definiert ist und mit einem Deflektor (45) zwischen den zwei Lippen (39, 41) zum Abscheiden der wiederanliegenden Strömung (8'), die dem Cuanda-Effekt unterworfen wird, von der Abtastströmung an einem Auslass des Diffusors ausgestattet ist.

13. Lufttechnische Vorrichtung (1) nach dem vorstehenden Anspruch, wobei der Deflektor (45) eine einstellbare Position zum Verstellen jeweils der Abstände zwischen dem Deflektor (45) und den zwei Lippen (39, 41) und separaten Anpassen der Intensität der wiederanliegenden Strömung (8') und der der Abtastströmung besitzt.

14. Lufttechnische Vorrichtung (1) nach einem der vorstehenden Ansprüche, wobei der kreisförmige Schlitz (42) einen ersten Diffusionsweg der gereinigten Luft ausbildet und der Diffusor (38) einen zweiten Diffusionsweg der gereinigten Luft umfasst, zusammengesetzt aus mindestens einer Düse (43), die in Position, Querschnitt und Richtung zum Erreichen eines oberen Teils des peripheren Raums definiert ist.

15. Lufttechnische Vorrichtung (1) nach dem vorstehenden Anspruch, wobei die Düse (43) aus einer Leitung ausgebildet ist, die in einer Lippe endet, wobei die Leitung eine Innenoberfläche vorweist, die schraubenförmige Rippen (44) trägt.

16. Lufttechnische Vorrichtung (1) nach einem der vorstehenden Ansprüche, wobei die Saugmündung (28) mit einem Gitter versehen ist, um die Partikel mit einer Größe von mehr als 500 Mikrometern zu stoppen und sie durch Trägheitsabscheidung zu sammeln.

17. Lufttechnische Vorrichtung (1) nach einem der vorstehenden Ansprüche, wobei die Saugmündung (28) von einem konvexen kreisförmigen Becher (46) überragt ist, dessen Konvexität zu der ebenen Oberfläche hin zum Sammeln der wiederanliegenden Strömung (8') und Produzieren eines Venturi-Effekts ausgerichtet ist, wobei die Saugkapazität der Saugmündung (28) erhöht wird.

## Claims

1. Aeraulic device (1) for treating the air contained in a peripheral space, the device (1) being suitable for an air stream to pass therethrough and comprising:
a. a tubular inlet manifold (25) intended to rest on a flat surface, comprising a suction mouth (28) at which the airflow lines (6, 7) of the peripheral space are intended to close;
b. an extractor (21) to generate circulation of the air stream within the device (1);
c. a plenum (36) suitable for the air stream generated in the inlet manifold (25) to pass therethrough, the plenum (36) comprising a radiation source (37) which is capable of sterilizing the air in the stream, the plenum (36) being configured to allow the air in the air stream to remain therein for a treatment time which is selected according to the power of the source (37);
d. a diffuser (38) mounted on the plenum (36) and the aeraulic device being **characterize in that** the diffuser is configured to diffuse the air stream in the peripheral space along flow lines comprising at least one reattachment flow (8') descending along an outer surface of the plenum (36) towards the suction mouth (28), the diffuser having a circular slot (42) which is configured to form, by means of the Coanda effect, the reattachment flow (8'), so that non-turbulent airflow lines (6, 7) of the peripheral space close in on the air stream, allowing the air to circulate continuously on itself within the peripheral space, thereby limiting exchanges with the outside of this space and avoiding air mixing within this space.

2. Aeraulic device (1) according to the preceding claim, comprising a support cylinder (20) in which the extractor (21) is arranged, the extractor comprising a helical propeller which has a plurality of vanes (22).

3. Aeraulic device (1) according to the preceding claim, wherein the support cylinder (20) is equipped, on the downstream side thereof, with a straightener (24) and/or at least one blade (38) for deflecting the airflow entering the plenum (36).

4. Aeraulic device (1) according to one of the preceding claims, wherein the tubular inlet manifold (25) has a first end arranged at a selected distance from the surface, thereby forming the suction mouth (28) for the air.

5. Aeraulic device (1) according to one of claims 2 and 3, wherein the suction mouth (28) has an effective suction cross-section which is smaller than the cross-section of the support cylinder (20).

6. Aeraulic device (1) according to claim 3, comprising tilting flaps (29, 30) for controlling the flow of air entering the suction mouth (28), the flaps (29, 30) being arranged in planes perpendicular to the flat surface.

7. Aeraulic device (1) according to one of the preceding claims, wherein the plenum (36) has the shape of a sphere truncated at two opposite poles.

8. Aeraulic device (1) according to claim 2, wherein the plenum (36) has the shape of a sphere having a diameter greater than the diameter of the support cylinder (20).

9. Aeraulic device (1) according to one of the preceding claims, wherein the radiation source (37) is an ultraviolet lamp, for example a U-shaped low-pressure mercury lamp.

10. Aeraulic device (1) according to one of the preceding claims, wherein an inner surface (39) of the plenum (36) is covered with a reflective material.

11. Aeraulic device (1) according to one of the preceding claims, wherein the diffuser (38) consists of a spherical cap, bordered by a horn-shaped surface, which covers an upper opening of the plenum (36).

12. Aeraulic device (1) according to one of the preceding claims, wherein the circular slot (42) is defined by two lips (39, 41) and is equipped with a deflector (45) between the two lips (39, 41) to separate the reattachment flow (8'), which is subjected to the Coanda effect, from the sweep flow, at the diffuser outlet.

13. Aeraulic device (1) according to the preceding claim, wherein the deflector (45) has an adjustable position for allowing the distances between the deflector (45) and the two lips (39, 41) to be adjusted and the intensity of the reattachment flow (8') and that of the sweep flow to be adapted separately.

14. Aeraulic device (1) according to one of the preceding claims, wherein the circular slot (42) forms a first diffusion path for purified air and the diffuser (38) comprises a second diffusion path for purified air, consisting of at least one nozzle (43) defined in terms of position, cross-section and direction to reach an upper part of the peripheral space.

15. Aeraulic device (1) according to the preceding claim, wherein the nozzle (43) is formed by a duct which ends in a lip, the duct having an inner surface which has helical ribs (44).

16. Aeraulic device (1) according to one of the preceding claims, wherein the suction mouth (28) has a grid in order to stop particles that are larger than 500 microns and collect them by means of inertial separation.

17. Aeraulic device (1) according to one of the preceding claims, wherein a convex circular cup (46) is mounted on the suction mouth (28), the convexity of said cup being oriented towards the flat surface to collect the reattachment flow (8') and produce a Venturi effect, thereby increasing the suction capacity of the suction mouth (28).
